(19) Europäisches Patentamt
European Patent Office
Office européen des brevets

(11) EP 4 310 111 A1

(12) EUROPEAN PATENT APPLICATION
published in accordance with Art. 153(4) EPC

(43) Date of publication:
**24.01.2024 Bulletin 2024/04**

(21) Application number: **22771540.6**

(22) Date of filing: **18.03.2022**

(51) International Patent Classification (IPC):
***C08F 8/14*** (2006.01) ***C08F 210/02*** (2006.01)
***C08L 23/08*** (2006.01)

(52) Cooperative Patent Classification (CPC):
**C08F 8/14; C08F 210/02; C08F 220/14; C08L 23/08; C08L 23/26**

(86) International application number:
**PCT/JP2022/012517**

(87) International publication number:
**WO 2022/196795 (22.09.2022 Gazette 2022/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.03.2021 JP 2021045929**

(71) Applicant: **Unimatec Co., Ltd.**
**Tokyo 105-0012 (JP)**

(72) Inventors:
- **TOGE Daichi**
  **Kitaibaraki-shi, Ibaraki 319-1544 (JP)**
- **WATANABE Daiki**
  **Kitaibaraki-shi, Ibaraki 319-1544 (JP)**
- **ABE Kazunari**
  **Kawasaki-shi, Kanagawa 210-8548 (JP)**
- **SOUTOME Ikuo**
  **Kawasaki-shi, Kanagawa 210-8548 (JP)**

(74) Representative: **Kraus & Weisert Patentanwälte PartGmbB**
**Thomas-Wimmer-Ring 15**
**80539 München (DE)**

# (54) ETHYLENE/(METH)ACRYLATE-BASED ELASTOMER AND PRODUCTION METHOD THEREFOR

(57) An ethylene-(meth)acrylate-based elastomer having a structure in which 40 to 79.9 mol% of ethylene, 20.0 to 50.0 mol% of an alkyl (meth)acrylate containing an alkyl group having 1 to 8 carbon atoms and/or an alkoxy (meth)acrylate containing an alkoxyalkyl group having 2 to 8 carbon atoms, 0.05 to 20.0 mol% of an unsaturated dicarboxylic acid monosaturated ester, and 0 to 20.0 mol% of an unsaturated dicarboxylic anhydride are copolymerized, and having a monosaturated esterification rate of the acid anhydride of 70% or more as measured by IR. The ethylene-(meth)acrylate-based elastomer gives a vulcanizate having excellent heat resistance, and molding processability.

EP 4 310 111 A1

## Description

TECHNICAL FIELD

The present invention relates to an ethylene-(meth)acrylate-based elastomer and a method for producing the same. More particularly, the present invention relates to an ethylene-(meth)acrylate-based elastomer that gives a vulcanizate having excellent heat resistance and molding processability, and a method for producing the same.

BACKGROUND ART

As a copolymer that gives a vulcanizate having excellent oil and heat resistance, Patent Document 1 has proposed a random copolymer comprising ethylene, methyl acrylate or ethyl acrylate, and 1,4-butenedioic acid monoalkyl ester as monomers. This copolymer is produced by polymerization at high pressure; however, due to the corrosive nature of 1,4-butenedioic acid monoalkyl ester, corrosion-resistant high-pressure equipment is required.

PRIOR ART DOCUMENT

PATENT DOCUMENT

Patent Document 1 : JP-A-50-49389
Patent Document 2 : JP-A-8-25586
Patent Document 3 : JP-B-7-94486
Patent Document 4 : JP-A-61-272204
Patent Document 5 : JP-A-2010-235955

OUTLINE OF THE INVENTION

PROBLEM TO BE SOLVED BY THE INVENTION

An object of the present invention is to provide an ethylene-(meth)acrylate-based elastomer that can give a vulcanizate having excellent heat resistance, and molding processability and to also provide a method for producing the same.

MEANS FOR SOLVING THE PROBLEM

The above object of the present invention can be achieved by an ethylene-(meth)acrylate-based elastomer having a structure in which 40 to 79.9 mol% of ethylene, 20.0 to 50.0 mol% of an alkyl (meth)acrylate containing an alkyl group having 1 to 8 carbon atoms and/or an alkoxy (meth)acrylate containing an alkoxyalkyl group having 2 to 8 carbon atoms, 0.05 to 20.0 mol% of an unsaturated dicarboxylic acid monosaturated ester, and 0 to 20.0 mol% of an unsaturated dicarboxylic anhydride are copolymerized, and having a monosaturated esterification rate of the acid anhydride of 70% or more as measured by infrared absorption spectroscopy (IR).

The ethylene-(meth)acrylate-based elastomer is produced by subjecting, in a copolymer of ethylene, an alkyl (meth)acrylate containing an alkyl group having 1 to 8 carbon atoms and/or an alkoxy (meth)acrylate containing an alkoxyalkyl group having 2 to 8 carbon atoms, and an unsaturated dicarboxylic anhydride, the unsaturated dicarboxylic anhydride to monosaturated esterification modification treatment.

EFFECT OF THE INVENTION

Vulcanizates obtained from the ethylene-(meth)acrylate-based elastomer according to the present invention have excellent heat resistance, and molding processability, and thus are effectively used as rubber parts in a wide range of fields, such as transportation equipment (such as automobiles), industrial machinery, general equipment, and electrical equipment. Examples of such rubber parts include hoses, and the like, such as O rings, various packings, oil seals, bearing seals, head cover gaskets, plug tube gaskets, engine head cover gaskets, oil filter packings, oil pan gaskets, anti-vibration parts, oil hoses, fuel hoses, air hoses, air duct hoses, turbocharger hoses, PCV hoses, EGR hoses, and intercooler hoses.

EMBODIMENTS FOR CARRYING OUT THE INVENTION

As the (meth)acrylate, at least one of an alkyl (meth)acrylate containing an alkyl group having 1 to 8 carbon atoms and an alkoxy (meth)acrylate containing an alkoxyalkyl group having 2 to 8 carbon atoms is used. These can be used singly or in combination of two or more thereof. Here, (meth)acrylate refers to acrylate or methacrylate.

Examples of the alkyl (meth)acrylate include methyl (meth)acrylate, ethyl (meth)acrylate, propyl (meth)acrylate, isopropyl (meth)acrylate, n-butyl (meth)acrylate, n-hexyl (meth)acrylate, 2-ethylhexyl (meth)acrylate, n-octyl (meth)acrylate, and the like. Alkyl groups having a longer chain length are generally advantageous in terms of cold resistance, but are disadvantageous in terms of oil resistance. Alkyl groups having a shorter chain length show an opposite tendency. In terms of the balance between oil resistance and cold resistance, methyl acrylate, ethyl acrylate and n-butyl acrylate are preferably used. More Preferably, methyl acrylate is used.

Moreover, examples of the alkoxyalkyl (meth)acrylate include methoxymethyl (meth)acrylate, methoxyethyl (meth)acrylate, ethoxyethyl (meth)acrylate, n-butoxyethyl (meth)acrylate, ethoxypropyl (meth)acrylate, methoxyethoxyethyl (meth)acrylate, ethoxyethoxyethyl (meth)acrylate, and the like.

The unsaturated dicarboxylic anhydride is a compound having one or more radically polymerizable unsaturated bonds and one or more acid anhydride groups in the molecule. Examples thereof include maleic anhydride, citraconic anhydride, itaconic anhydride, 2,3-dimethylmaleic anhydride, 2-(2-carboxyethyl)-3-methylmaleic anhydride, 3,4,5,6-tetrahydrophthalic anhydride, phenylmaleic anhydride, 2,3-diphenylmaleic anhydride, allylsuccinic anhydride, (2-methyl-2-propenyl)succinic anhydride, 2-buten-1-ylsuccinic anhydride, cis-4-cyclohexene-1,2-dicarboxylic anhydride, 5-norbornene-2,3-dicarboxylic anhydride, bicyclo[2.2.2]oct-5-ene-2,3-dicarboxylic anhydride, and the like; preferably, maleic anhydride, itaconic anhydride, and citraconic anhydride are used. These can be used singly or in combination of two or more thereof.

In addition to the above monomers, if necessary, other copolymerizable monomers can also be used as long as the characteristics are not impaired. Examples of such copolymerizable monomers include vinyl compounds, such as styrene, vinyl toluene, $\alpha$-methylstyrene, vinyl naphthalene, acrylonitrile, methacrylonitrile, acetone acrylamide, 2-hydroxyethyl acrylate, 4-hydroxybutyl acrylate, 2-hydroxy-3-chloropropyl (meth)acrylate, vinyl chloride, vinylidene chloride, vinyl fluoride, vinylidene fluoride, chloroethyl vinyl ether, hydroxyethyl vinyl ether, hydroxybutyl vinyl ether, pentafluoropropyl (meth)acrylate, and trifluoroethyl (meth)acrylate; diene compounds, such as isoprene, pentadiene, and butadiene; and $\alpha$-olefins, such as propylene, 1-butene, 1-hexene, and 1-octene. Furthermore, in order to improve kneading processability, extrusion processability, and other properties, a polyfunctional (meth)acrylate or oligomer can be further copolymerized. Examples thereof include di(meth)acrylates of alkylene glycols, such as ethylene glycol, propylene glycol, 1,4-butanediol, 1,6-hexanediol, and 1,9-nonanediol; di(meth)acrylates, such as neopentyl glycol, tetraethylene glycol, tripropylene glycol, and polypropylene glycol; bisphenol A • ethylene oxide adduct diacrylate, dimethylol tricyclodecane diacrylate, glycerol methacrylate acrylate, 3-acryloyloxyglycerol monomethacrylate, and the like.

Method for producing the copolymer is not particularly limited, and various polymerization methods, such as radical solution polymerization (Patent Documents 2 and 3), can be suitably used. In general, the copolymer can be produced by utilizing high-pressure low-density polyethylene production equipment and technology. For example, the copolymer is produced by a bulk polymerization method at a polymerization pressure of 70 to 350 MPa, preferably 100 to 250 MPa, or by a radical polymerization method at a polymerization temperature of 100 to 300°C, preferably 150 to 270°C. If the polymerization pressure is less than 70 MPa, the molecular weight of the polymer becomes low, and moldability and the resin physical properties of the resin composition deteriorate. In contrast, a polymerization pressure exceeding-350 MPa just increases the production cost and is practically meaningless. Further, if the polymerization temperature is lower than 100°C, the polymerization reaction is not stable, and the conversion rate to the copolymer decreases, which is economically a problem. In contrast, if the polymerization temperature exceeds 300°C, the molecular weight of the copolymer is reduced, and the risk of runaway reactions arises at the same time.

Since radically polymerizable dicarboxylic anhydrides have poor polymerization stability, a high degree of homogenization in the reactor is required. Moreover, if necessary, multiple reactors can be connected in series or in parallel to carry out multistage polymerization. Further, more precise temperature control can be achieved by partitioning the inside of the reactor into multiple zones. It is also possible to adjust the polymerization reaction speed by adjusting the temperature of ethylene subjected to polymerization. The larger the temperature difference from the polymerization temperature is, the faster the polymerization reaction speed gets.

The polymerization reaction is carried out in the presence of at least one free radical polymerization initiator. As the free radical polymerization initiator used in radical polymerization, a compound that generates free radicals is selected. Examples thereof include oxygen; dialkyl peroxides, such as di-tert-butyl peroxide, tert-butyl cumyl peroxide, and dicumyl peroxide; diacyl peroxides, such as acetyl peroxide, isobutyl peroxide, and octanoyl peroxide; peroxydicarbonates, such as diisopropyl peroxydicarbonate and di(2-ethylhexylperoxy)dicarbonate; peroxyesters, such as tert-butyl peroxyisobutyrate, tert-butyl peroxyneodecanoate, tert-butyl peroxypivalate, and tert-butyl peroxylaurate; ketone peroxides, such as methyl ethyl ketone peroxide and cyclohexanone peroxide; peroxyketals, such as 1,1-bis-tert-butylperoxycyclohexane and 2,2-bis-tert-butylperoxyoctane; hydroperoxides, such as tert-butyl hydroperoxide and cumene hydroperoxide; azo compounds, such as 2,2-azobisisobutyronitrile; and the like.

The obtained ethylene-(meth)acrylate-based copolymer containing an acid anhydride is subjected to a monosaturated esterification modification treatment using a shear melt-kneading method under shear conditions, preferably using a roll kneader, a closed kneader, or a twin screw extruder.

The monosaturated esterification modification treatment using a shear melt-kneading method is carried out by reacting the ethylene-(meth)acrylate-based copolymer containing an acid anhydride with a saturated alcohol, preferably a primary saturated alcohol, while applying shear using a kneading machine. As the saturated alcohol, one suitable for the equipment used for the modification or for the treatment conditions, such as reaction temperature or catalyst type, is used. Examples thereof include methanol, ethanol, 1-propanol, 2-propanol, 1-butanol, 2-methyl-1-butanol, 2-butanol, 2-methyl-2-propanol, 1-pentanol, 3-methyl-1-butanol, 2-methyl-1-butanol, 2,2-dimethyl-1-propanol, 2-pentanol, 3-methyl-2-butanol, 2-methyl-2-butanol, cyclopentanol, 1-hexanol, 2-methyl-1-pentanol, 2-ethyl-1-butanol, 2-hexanol, 4-methyl-2-pentanol, cyclohexanol, 1-heptanol, 2-heptanol, 1-octanol, 2-ethyl-1-hexanol, methoxymethanol, ethoxymethanol, butoxymethanol, 2-methoxyethanol, 2-ethoxyethanol, 2-butoxyethanol, 2-(2-methoxyethoxy)ethanol, 2-(2-ethoxyethoxy)ethanol, 2-(2-butoxyethoxy)ethanol, 2-[2-(2-methoxyethoxy)ethoxy]ethanol, 2-[2-(2-ethoxyethoxy)ethoxy]ethanol, 2-[2-(2-butoxyethoxy)ethoxy]ethanol, 1-methoxy-2-propanol, 1-ethoxy-2-propanol, 1-butoxy-2-propanol, and the like. Preferably, 1-butanol, 1-hexanol, or 2-[2-(2-methoxyethoxy)ethoxy]ethanol is used so that (number of moles of alcohol)/(number of moles of copolymerized maleic anhydride) is 1.6 or more. If this value is less than 1.6, the monoesterification rate does not reach 70% or more.

A monosaturated esterification catalyst can be also used to promote the monosaturated esterification. The monosaturated esterification modification treatment can be also performed without using any solvent; however, a small amount of solvent can be also used for the purpose of adjusting fluidity.

As the kneading machine that can be used in the monosaturated esterification modification treatment, for example, a roll kneader, a single screw extruder, a twin screw extruder, a kneader, a roll kneader, a Banbury mixer, a Brabender mixer, a reciprocating kneader (BUSS KNEADER), or the like can be used without limitation. Preferred are a roll kneader, a single screw extruder, a twin screw extruder, and a reciprocating kneader (BUSS KNEADER), which can continuously perform the monosaturated esterification modification treatment and are advantageous in terms of productivity; and more preferred in terms of the versatility of incidental equipment is a roll kneader or a twin screw extruder.

As the monosaturated esterification catalyst, an acid catalyst and a base catalyst can both be used. Examples of the acid catalyst include organic acids, such as benzenesulfonic acid, p-toluenesulfonic acid, methanesulfonic acid, ethanesulfonic acid, and trifluoroacetic acid; mineral acids, such as hydrochloric acid, nitric acid, sulfuric acid, and phosphoric acid; and heteropolyacids, such as heteropolyacids and heteropolyacid salts. Examples of base catalyst include inorganic bases, such as carbonates and hydroxides of alkali metals and alkaline earth metals, aliphatic or aromatic organic bases, fatty acid salts of alkali metals or alkaline earth metals, and the like; preferably, fatty acid salts of alkali metals and organic bases are used. Examples of the fatty acid salt of alkali metal include alkali metal salts of higher fatty acids, such as potassium stearate, potassium laurate, potassium myristate, lithium stearate, and sodium stearate; preferably alkali metal salts, such as potassium stearate and potassium laurate. Examples of the organic base include 1,8-diazabicyclo[5.4.0]undecene-7 or 1,5-diazabicyclo[4.3.0]nonene-5 and salts thereof, amine compounds, such as tertiary amines, imidazole, and the like. The monosaturated esterification catalyst is used at a ratio of about 0.01 to 10 parts by weight, preferably about 0.1 to 5 parts by weight, based on 100 parts by weight of the ethylene-(meth)acrylate-based copolymer. By the monosaturated esterification modification treatment, the dicarboxylic anhydride is converted to a monosaturated ester.

In addition, Patent Document 4 indicates that when an ethylene-alkyl (meth)acrylate-maleic anhydride-maleic acid ester quaternary copolymer is modified with an unsaturated amine or unsaturated alcohol, a half ester copolymer of maleic acid is performed by kneading with Labo Plastomill.

It is described that regarding the hydrolysis reaction or half-esterification reaction of the raw material terpolymer, the hydrolysis reaction is carried out in an organic solvent in the presence of a catalyst, such as a tertiary amine salt, and the half-esterification reaction is carried out by a similar solution or melting method and in the melting method kneading machines, such as Banbury mixers and extruders, are used; however, the solution method is used in all the examples.

After the monosaturated esterification modification treatment, an aging treatment is preferably performed in order to improve the monosaturated esterification rate. The aging temperature is about 0 to 100°C, and the aging time is suitably set depending on the aging temperature. For example, at room temperature of 23°C, the aging time is set to 1 day or more. If the aging temperature rises, it is possible to shorten the aging time according to the temperature rise; however, from an economic point of view, aging at room temperature is adopted.

Among the monosaturated esterification modification treated ethylene-(meth)acrylate-based elastomers, in terms of obtaining a vulcanizate having excellent heat resistance and molding processability, one having a structure in which 40 to 79.9 mol% of ethylene, 20.0 to 50.0 mol% of an alkyl (meth)acrylate containing an alkyl group having 1 to

8 carbon atoms and/or an alkoxy (meth)acrylate containing an alkoxyalkyl group having 2 to 8 carbon atoms, 0.05 to 20.0 mol% of an unsaturated dicarboxylic acid monosaturated ester, and 0 to 20.0 mol% of an unsaturated dicarboxylic anhydride are copolymerized, and having a monosaturated esterification rate of the acid anhydride measured by IR of 70% or more is selected. This elastomer is compounded with a vulcanizing agent to prepare an ethylene-(meth)acrylate-based elastomer composition.

If one having the monosaturated esterification rate of the acid anhydride measured by IR of less than 70% is used, the mixture of a composition obtained by compounding this with a vulcanizing agent has large ML min (125°C) and short t5; therefore, it cannot be molded into a molded product. Further, the esterification rate measured by IR is calculated from the peak ratio (A1855/A4254) using a calibration curve of the IR absorbance ratio.

As the vulcanizing agent for the ethylene-(meth)acrylate-based elastomer, an amine-based vulcanizing agent or an organic peroxide crosslinking agent can be used.

Examples of the amine-based vulcanizing agents include aliphatic polyvalent amine compounds, such as hexamethylenediamine, hexamethylenediamine carbamate, N,N'-dicinnamylidene-1,6-hexanediamine, 4,4'-bis(aminocyclohexyl)methane, ethylenediamine, ethylenediamine carbamate, cyclohexanediamine, bis(hexamethylene)triamine, 3,3'-diaminopropylamine, cyclohexanetriamine, hexamethylenediamine-cinnamaldehyde adduct, hexamethylenediamine benzoate, and diamino-modified siloxane; alicyclic polyamine compounds, such as 4,4'-methylenebiscyclohexylamine, bis(4-amino-3-methyldicyclohexyl)methane, and 4,4'-methylenebiscyclohexylamine-cinnamaldehyde adduct; aromatic polyamine compounds, such as N,N'-dicinnamylidene-1,6-hexanediamine, 4,4'-($\alpha$,$\alpha$-dimethylbenzyl)diphenylamine, 4,4'-methylenedianiline, m-phenylenediamine, 4,4'-diaminodiphenyl ether, p-phenylenediamine, p,p'-ethylenedianiline, 4,4'-(p-phenylenediisopropylidene)dianiline, 4,4'-(m-phenylenediisopropylidene)dianiline, 3,4'-diaminodiphenyl ether, 4,4'-diaminodiphenyl sulfone, 2,2-bis[4-(4-aminophenoxy)phenyl]propane, bis[4-(4-aminophenoxy)phenyl]sulfone, bis[4-(3-aminophenoxy)phenyl]sulfone, 4,4'-bis(4-aminophenoxy)biphenol, bis[4-(4-aminophenoxy)phenyl]ether, 2,2-bis[4-(4-aminophenoxy)phenyl]hexafluoropropane, 1,4-bis(4-aminophenoxy)benzene, 1,3-bis(4-aminophenoxy)benzene, m-xylylenediamine, p-xylylenediamine, 1,3,5-benzenetriamine, and 4,4'-diaminobenzanilide; and the like. Further, an aliphatic polyvalent amine with an amino group protected by an organic group can also be used.

The diurethane compound disclosed in Patent Document 5 etc. represented by the general formula:

$$R^2(SO_2)_m(CH_2)_nOCONHR^1NHCOO(CH_2)_n(SO_2)_mR^2$$

(wherein $R^1$ is a $C_1$-$C_{20}$ linear or branched divalent aliphatic alkylene group, a divalent alicyclic hydrocarbon group, or a divalent aromatic group; $R^2$ is a group that can be decomposed by the action of a basic vulcanization accelerator to generate diamine when it has a carbamate structure, a $C_1$-$C_{20}$ alkyl group, an alkoxyl group, a phenoxy group, a haloalkyl group, an olefinic group, an aryl group or an aralkyl group, a fluorenyl-containing group, an S-containing group, an Si-containing group, an N-containing group, or a P-containing group, wherein the S-containing group or N-containing group is an aromatic or alicyclic heterocyclic group; n is 0, 1, or 2; and m is 0 or 1), preferably a diurethane compound obtained by di-substituting the amino group of alkylenediamine represented by the general formula $H_2N(CH_2)_lNH_2$ (l = 4 to 6) with 9-fluorenylmethyl chloroformate [Fmoc], more preferably a diurethane compound [HMDA-Fmoc] obtained by di-substituting the amino group of hexamethylenediamine (l=6), i.e.

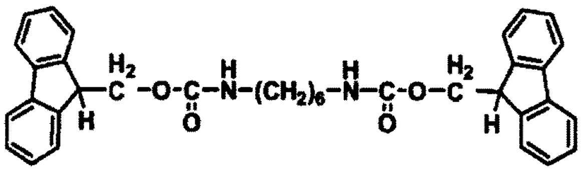

can also be used.

Such a polyamine compound vulcanizing agent is used at a ratio of about 0.1 to 5 parts by weight, preferably 0.5 to 2 parts by weight, based on 100 parts by weight of the ethylene-(meth)acrylate-based elastomer. If the compounding amount of the vulcanizing agent is less than this range, vulcanization is insufficient, which leads to deterioration of the mechanical properties of the vulcanizate and decrease of the vulcanization rate. If the compounding amount of the vulcanizing agent is greater than this range, excessive vulcanization may progress to reduce the elasticity of the vulcanizate. In the vulcanization, a basic vulcanization accelerator, a thiuram-based crosslinking accelerator and a thiourea-based crosslinking accelerator are used in combination at a ratio of about 0.5 to 5 parts by weight, preferably 0.5 to 3 parts by weight, based on 100 parts by weight of the ethylene-(meth)acrylate-based elastomer.

As the basic vulcanization accelerator, guanidine compounds or diazabicycloalkene compounds, such as 1,8-diazabicyclo[5.4.0]undecene-7 and 1,5-diazabicyclo[4.3.0]nonene-5, or organic acid salts or inorganic acid salts thereof are used. From the viewpoint of a higher addition effect, 1,8-diazabicyclo[5.4.0]undecene-7[DBU] is preferably used.

Moreover, a mixture of 1,8-diazabicyclo[5.4.0]undecene-7 and silica can also be used. In practice, for example, Vulcofac ACT55, produced by Safic Alcan and the like are used.

Examples of the compound that forms an organic acid salt or inorganic acid salt of the diazabicycloalkene compound include hydrochloric acid, sulfuric acid, carboxylic acid, sulfonic acid, phenol, and the like. Examples of the carboxylic acid include octylic acid, oleic acid, formic acid, orthophthalic acid, adipic acid, and the like. Further, examples of the sulfonic acid include benzenesulfonic acid, toluenesulfonic acid, dodecylbenzenesulfonic acid, naphthalenesulfonic acid, and the like. These can be used singly or in combination of two or more thereof.

Usable examples of the guanidine compound include guanidine or substituted guanidine, such as aminoguanidine, 1,1,3,3-tetramethylguanidine, n-dodecylguanidine, methylol guanidine, dimethylolguanidine, 1-phenylguanidine, 1,3-diphenylguanidine, 1,3-di-o-tolylguanidine, triphenylguanidine, 1-benzyl-2,3-dimethylguanidine, cyanoguanidine, and the like. In addition, 1,6-guanidinohexane, guanylurea, biguanide, 1-o-tolylbiguanide, and the like can also be used.

Examples of the thiuram-based compound include tetramethylthiuram disulfide and the like, and examples of the thiourea-based compound include N,N'-diphenylthiourea and the like.

Examples of the organic peroxide include di-tert-butyl peroxide, dicumyl peroxide, di-tert-butyl cumyl peroxide, 1,1-di(tert-butylperoxy)-3,3,5-trimethylcyclohexane, 2,5-dimethyl-2,5-di(tert-butylperoxy)hexane, 2,5-dimethyl-2,5-di(tert-butylperoxy)hexin-3, 1,3-di(tert-butylperoxydiisopropyl)benzene, 2,5-dimethyl-2,5-di(benzoylperoxy)hexane, tert-butylperoxybenzoate, tert-butylperoxy isopropyl carbonate, n-butyl-4,4-di(tert-butylperoxy)valerate, and the like. Such an organic peroxide is used at a ratio of about 0.2 to 10 parts by weight, preferably about 0.75 to 2 parts by weight, based on 100 parts by weight of the ethylene-(meth)acrylate-based elastomer.

For the peroxide crosslinkable composition, a crosslinking aid for peroxide crosslinking comprising polyfunctional unsaturated compounds is preferably used in combination. Usable examples of the polyfunctional unsaturated compounds include ethylene glycol di(meth)acrylate, propylene glycol di(meth)acrylate, triallyl(iso)cyanurate, trimethylolpropane tri(meth)acrylate, triallyl trimellitate, and bismaleimide compounds (e.g., N,N'-m-phenylenebismaleimide, N,N'-p-phenylenebismaleimide, N,N'-p-phenylene-(1-methyl)bismaleimide, N,N'-2,7-naphthalenebismaleimide, N,N'-m-phenylene-4-methylbismaleimide, and N,N'-m-phenylene(4-ethyl)bismaleimide). Preferably, N,N'-m-phenylenedimaleimide is used at a ratio of about 0.2 to 15 parts by weight, preferably about 1 to 10 parts by weight, based on 100 parts by weight of the copolymer.

To the ethylene-(meth)acrylate-based elastomer, if necessary, various additives, such as reinforcing agents, fillers, processing aids, plasticizers, softeners, antioxidants, coloring agents, stabilizers, adhesive aids, mold release agents, conductivity-imparting agents, thermal conductivity-imparting agents, surface non-adhesive agents, tackifiers, flexibility-imparting agents, heat resistance-improving agents, flame retardants, ultraviolet absorbers, oil resistance-improving agents, anti-scorching agents, and lubricants are appropriately added to be used.

Examples of the reinforcing agent and filler include silica, such as basic silica and acidic silica; metal oxides, such as magnesium oxide, zinc oxide, calcium oxide, titanium oxide, and aluminum oxide; metal hydroxides, such as magnesium hydroxide, aluminum hydroxide, and calcium hydroxide; metal carbonates, such as magnesium carbonate, aluminum carbonate, calcium carbonate, and barium carbonate; silicates, such as magnesium silicate, calcium silicate, sodium silicate, and aluminum silicate; sulfates, such as aluminum sulfate, calcium sulfate, and barium sulfate; synthetic hydrotalcite; metal sulfides, such as molybdenum disulfide, iron sulfide, and copper sulfide; diatomaceous earth, asbestos, lithopone (zinc sulfide/barium sulfide), graphite, carbon black (MT carbon black, SRF carbon black, FEF carbon black, HAF carbon black, etc.), fluorinated carbon, calcium fluoride, coke, quartz fine powder, zinc white, talc, mica powder, wollastonite, carbon fiber, aramid fiber, various whiskers, glass fiber, organic reinforcing agents, organic fillers, and the like.

Examples of the antioxidant include amine-based antioxidants, such as phenyl-α-naphthylamine, phenyl-β-naphthylamine, p-(p-toluenesulfonylamide)-diphenylamine, 4,4'-(α,α-dimethylbenzyl)diphenylamine, N,N-diphenyl-p-phenylenediamine, N-isopropyl-N'-phenyl-p-phenylenediamine, and butylaldehyde-aniline condensates; phenol antioxidants, such as styrenated phenols such as 2,6-di-tert-butylphenol, butylhydroxyanisole, 2,6-di-tert-butyl-α-dimethylamino-p-cresol, octadecyl-3-(3,5-di-tert-butyl-4-hydroxyphenyl)propionate, and mono, di or tri (α-methylbenzyl)phenol, 2,2'-methylene-bis(6-α-methylbenzyl-p-cresol), 4,4'-methylenebis(2,6-di-tert-butylphenol), 2,2'-methylenebis(4-methyl-6-tert-butylphenol), alkylated bisphenol, butylated reaction products of p-cresol and dicyclopentadiene, 1,3,5-tris(3',5'-di-tert-butyl-4'-hydroxybenzyl)isocyanurate, 1,1,3-tris(2-methyl-4-hydroxy-5-tert-butylphenyl)butane, butylidenebis(methyl-butylphenol), n-octadecyl 3-(4'-hydroxy-3',,5 '-di-tert-butylphenyl)propionate, pentaerythritol tetrakis[3-(3 ',5' -di-tert-butyl-4'hydroxyphenyl)propionate], 2,2'-dimethyl-2,2'-(2,4,8,10-tetraoxaspiro[5.5]undecane-3,9-diyl)dipropane-1,1'-diylbis[3-(tert-butyl-4-hydroxy-5-methylphenyl)propanoate], 1,3,5-trimethyl-2,4,6-tris(3,5-di-tert-butyl-4-hydroxybenzyl)benzene, and 2,6-di-tert-butyl-4-methylphenol; phosphite-based antioxidants, such as 3,9-dioctadecan-1-yl-2,4,8,10-tetraoxa-3,9-diphosphaspiro[5.5]undecane, 3,9-bis(2,6-di-tert-butyl-4-methylphenoxy)-2,4,8,10-tetraoxa-3,9-diphosphaspiro[5.5]undecane, 2,4,8,10-tetra-tert-butyl-6-[(2-ethylhexan-1-yl)oxy]-12H-dibenzo[d,g][1,3,2]dioxaphosphosine, tris(2,4-di-tert-butylphenyl)phosphite, trisnonylphenyl phosphite, 2-ethylhexyl diphenyl phosphite, diphenyl isodecyl phosphite, triisodecyl phosphite, and triphenyl phosphite; other thiophenol-based antioxidants, sulfur ester-based antioxidants, imidazole-based antioxidants, quinoline-based antioxidants, hydroquinone-based antioxidants, and the like. These antioxidants can be used singly or in combination of two or more thereof.

Examples of the processing aid include higher fatty acids, such as stearic acid, oleic acid, palmitic acid, and lauric acid; higher fatty acid salts, such as sodium stearate and zinc stearate; higher fatty acid amides, such as amide stearate and amide oleate; higher fatty acid esters, such as ethyl oleate; petroleum-based waxes, such as carnauba wax and ceresin wax; polyglycols, such as ethylene glycol, glycerol, and diethylene glycol; aliphatic hydrocarbons, such as vaseline and paraffin; silicone-based oils, silicone-based polymers, low-molecular-weight polyethylene, phthalic acid esters, phosphoric acid esters, rosin, (halogenated) dialkyl amine, (halogenated) dialkyl sulfone, surfactants, and the like.

Examples of the plasticizer include epoxy resin and derivatives of phthalic acid and sebacic acid, and the like. Examples of the softener include lubricating oil, process oil, coal tar, castor oil, and calcium stearate, and the like.

The preparation of the composition is carried out by adding a reinforcing agent, a stabilizer, a processing aid, and the like to the ethylene-(meth)acrylate-based elastomer using an open roll or a closed kneader and thereafter further adding a vulcanizing agent and a vulcanization accelerator. Vulcanization molding is carried out by performing primary vulcanization at about 150 to 200°C for about 1 to 30 minutes, optionally followed by oven vulcanization (secondary vulcanization) at about 150 to 200°C for about 1 to 16 hours. For molding, known methods, such as press molding, transfer molding, injection molding, and extrusion molding, can be applied depending on the product.

EXAMPLES

The following describes the present invention with reference to Examples.

Polymerization Examples 1 to 4

In Polymerization Example 1, high-pressure method low-density polyethylene plant equipment with a 5 L autoclave was used, and monomers were injected into a reactor where the monomer composition at the reactor inlet was 89.7 wt% of ethylene, 10.1 wt% of methyl acrylate, and 0.19 wt% of maleic anhydride. Di-(2-ethylhexyl peroxy)dicarbonate was used as a reaction initiator, and the polymerization was carried out under the conditions of a polymerization temperature of 165°C (only Polymerization Example 4 at 155°C) and a polymerization pressure of 140MPa (only Polymerization Example 4 at 170 MPa) . In other production examples, various copolymers shown in Table 1 were obtained by adjusting the monomer composition, polymerization temperature, and polymerization pressure.

Here, the copolymerization composition (mol%) of the terpolymer was calculated from the main monomer composition ratio (MA/E) and the MAH content.

- The main monomer composition ratio (mol%) was measured by IR. First, a baseline was drawn at 4600 $cm^{-1}$ and 3500 $cm^{-1}$, and the 4254 $cm^{-1}$ peak height derived from ethylene was measured. Next, a 1-point baseline was drawn at -3510 $cm^{-1}$, and the 3457 $cm^{-1}$ peak height derived from MA was measured. Further, the peak ratio (A3457/A4254) was calculated, and the main monomer composition ratio (mol%) was calculated using a calibration curve of the MA content and IR absorbance ratio separately created by NMR.
- The MAH content (mol%) was measured by IR. First, a 1-point baseline was drawn at 4600 $cm^{-1}$, and the 4254 $cm^{-1}$ peak height derived from ethylene was measured. Next, a baseline was drawn at 1875 $cm^{-1}$ and 1825 $cm^{-1}$, and the 1855 $cm^{-1}$ peak height derived from MAH was measured. Further, the MAH content was calculated from the peak ratio (A1855/A4254) using a calibration curve of the MAH content and IR absorbance ratio separately created by a titration method.

Table 1

| | | | | | | | |
|---|---|---|---|---|---|---|---|
| Polymerization Example | Copolymerization composition ratio | | | | | | |
| | MA content | MAH content | E content | Monomer composition | | | Polymerization rate |
| | | | | ethylene | MA | MAH | |
| | mol% | mol% | mol% | wt% | wt% | wt% | kg/hr |
| Polymerization Example 1 | 33.4 | 2.1 | 64.6 | 89.7 | 10.1 | 0.19 | 2.10 |
| Polymerization Example 2 | 31.1 | 1.2 | 67.7 | 88.7 | 11.1 | 0.21 | 2.56 |
| Polymerization Example 3 | 33.7 | 0.9 | 65.5 | 88.7 | 11.1 | 0.16 | 2.10 |

(continued)

| Polymerization Example | Copolymerization composition ratio | | | | | | |
|---|---|---|---|---|---|---|---|
| | MA content | MAH content | E content | Monomer composition | | | Polymerization rate |
| | | | | ethylene | MA | MAH | |
| | mol% | mol% | mol% | wt% | wt% | wt% | kg/hr |
| Polymerization Example 4 | 32.2 | 0.7 | 67.1 | 91.8 | 8.1 | 0.10 | 2.16 |
| Note 1) | MA: methyl acrylate | | | | | | |
| | MAH: maleic anhydride | | | | | | |
| | E: ethylene | | | | | | |
| | | | | | | | |
| Note 2) | The copolymerization composition ratio indicates the monomer composition | | | | | | |
| | in the resulting terpolymer | | | | | | |

Example 1

| | |
|---|---|
| (1) Terpolymer obtained in Polymerization Example 1 | 100 parts by weight |
| 1-butanol (b.p.117°C, Mw 74.1) | 6 parts by weight (alcohol/MAH molar ratio: 1.89) |
| Potassium stearate | 2 parts by weight |

Using each of the above components, a monosaturated esterification modification treatment was carried out using a roller blade closed kneader (Labo Plastomill R100, produced by Toyo Seiki Seisaku-sho, Ltd.) with a capacity of 100 ml in the following manner.

First, the kneader was preheated to 80 to 90°C, the polymer and the modification catalyst were supplied, and mastication was carried out at a rotation speed of 30 rpm for 2 minutes. Next, a specified amount of the alcohol was supplied, and the mixture was kneaded at a rotation speed of 30 rpm for 15 minutes and then discharged. Further, the discharged copolymer was cut into small pieces about 2 to 3 cm, followed by vacuum drying at a temperature of 60°C for 24 hours. The pressure at this time was -0.1 MPa (pressure display of the vacuum dryer). The alcohol/MAH molar ratio was calculated by the following calculation formula using the amount of the saturated alcohol used in modification and the MAH content of the terpolymer.

Amount of alcohol (mol/100 g copolymer)/MAH content (mol/100 g copolymer) of terpolymer

- The monosaturated esterification modification rate (%) was calculated by the following calculation formula:

$$[(\text{MAH content (mol\%) of terpolymer} - \text{MAH content (mol\%) after modification}]/(\text{MAH content (mol\%) of terpolymer}] \times 100$$

The cold resistance of the obtained monosaturated esterification modification treated copolymer was measured using MFR (melt flow rate; according to JIS K-7210 corresponding to ISO 1133, 190°C, 2.16 kg) and DSC. For DSC, using DSC6220 produced by SII, the temperature was raised from -100°C to 100°C at a heating rate of 10°C/min, and the temperature at which the differential peak of the DSC curve was obtained was regarded as Tg.

| | |
|---|---|
| \(2) Monosaturated esterification modification treated copolymer in the above (1) | 100 parts by weight |
| Stearic acid | 2 parts by weight |
| Amine-based antioxidant (Nocrac CD, produced by Ouchi Shinko Chemical Industrial Co., Ltd.) | 2 parts by weight |
| FEF carbon black (Seast GS, produced by Tokai Carbon Co., Ltd.) | 50 parts by weight |

| | |
|---|---|
| \Phosphoric acid half ester (Phosphanol RL210, produced by Toho Chemical Industry Co., Ltd.) | 1 part by weight |
| Stearyl amine (Farmin 80, produced by Kao Corporation) | 1 part by weight |
| Hexamethylenediamine carbamate (CHEMINOX AC-6, produced by Unimatec Co., Ltd.) | 1.25 parts by weight |
| DBU-dodecane dihydrochloride (70% product; Vulcofac ACT55, produced by Safic-Alcan) | 2 parts by weight |

\\\\Each of the above components was kneaded using an 8 inch roll (produced by Otake Kikai Kogyo K.K.), thereby producing a composition for evaluating rubber physical properties. The obtained kneaded composition was subjected to primary vulcanization at 180°C for 10 minutes and oven vulcanization (secondary vulcanization) at 175°C for 4 hours, thereby molding a vulcanization sheet and a block for measuring compression set according to JIS.

The obtained composition and molded product were measured for each of the following items.

Mooney viscosity scorch: according to JIS K 6300 corresponding to ISO 289
model: AM-4 (produced by Toyo Seiki Seisaku-sho, Ltd.), 125°C
Normal state value: according to JIS K 6253 and JIS K 6251 corresponding to ISO 37
Heat aging resistance: according to JIS K 6257 corresponding to ISO 188
175°C/70 hrs; hardness change was evaluated.
Compression set: according to JIS K 6262 corresponding to ISO 815-1
175°C/70 hrs; 25% compression

Example 2

In Example 1, the amount of 1-butanol used in the monosaturated esterification modification treatment in the step (1) was changed to 12 parts by weight (alcohol/MAH molar ratio: 3.77).

Comparative Example 1

In Example 1, the amount of 1-butanol used in the monosaturated esterification modification treatment in the step (1) was changed to 4 parts by weight (alcohol/MAH molar ratio: 1.25).

Comparative Example 2

In Example 1, the monosaturated esterification modification treatment in the step (1) was not performed.

The results obtained in Examples 1 and 2, and Comparative Example 1 are shown in the following Table 2. However, in Comparative Example 1, the vulcanization sheet and the block for compression set could not be molded due to the large ML min and short t5 of the kneaded material, and the physical properties of the molded product could not be measured. Further, in Comparative Example 2, compound burning occurred during kneading, and the characteristics could not be measured.

Table 2-1

| Measurement item | | Ex. 1 | Ex.2 | Comp. Ex. 1 |
|---|---|---|---|---|
| (Mono-esterification modification | | | | |
| treated copolymer) | | | | |
| Composition ratio | (mol%) | | | |
| Ethylene | | 64.6 | 64.6 | 64.6 |
| Methyl acrylate | | 33.4 | 33.4 | 33.4 |
| Mono-butyl ester | | 1.49 | 1.64 | 1.30 |
| Maleic anhydride | | 0.61 | 0.46 | 0.80 |

(continued)

| | | | | |
|---|---|---|---|---|
| Measurement item | | Ex. 1 | Ex.2 | Comp. Ex. 1 |
| Compound temperature | | | | |
| at the end of treatment | (°C) | 100 | 100 | 100 |
| MFR | (dg/min) | 48 | 47 | 50 |
| Tg | (°C) | -24.5 | -24.9 | -24.2 |
| Mono-butyl esterification rate | (%) | 71 | 78 | 62 |

Table 2-2

| | | | | |
|---|---|---|---|---|
| Measurement item | | Ex. 1 | Ex.2 | Comp. Ex. 1 |
| ML min (125°C) | (pts) | 44 | 14 | 160 |
| t5 | (min) | 2.2 | 3.3 | 1.3 |
| Hardness (Duro A) | (pts) | 70 | 72 | |
| 100% modulus | (MPa) | 5.9 | 6.4 | |
| Tensile strengs | (MPa) | 15.6 | 14.9 | |
| Elongation at break | (%) | 220 | 215 | |
| Compression set (175°C, 70hr) | (%) | 20 | 23 | |
| Heat resistance (175°C, 70hr) | | | | |
| Hardness change | (pts) | +2 | +2 | |

Example 3

In Example 1, the same amount (100 parts by weight) of the terpolymer obtained in Polymerization Example 2 was used as the terpolymer, and 18 parts by weight (alcohol/MAH molar ratio: 6.88) of 1-hexanol (b.p.: 157°C, Mw: 102.17) and 2.5 parts by weight of potassium laurate were used in the monosaturated esterification modification treatment in the step (1).

Example 4

In Example 3, the amount of 1-hexanol used in the monosaturated esterification modification treatment in the step (1) was changed to 9 parts by weight (alcohol/MAH molar ratio: 3.44).

Example 5

In Example 3, the amount of 1-hexanol used in the monosaturated esterification modification treatment in the step (1) was changed to 27 parts by weight (alcohol/MAH molar ratio: 10.33).

Comparative Example 3

In Example 3, the amount of 1-hexanol used in the monosaturated esterification modification treatment in the step (1) was changed to 4 parts by weight (alcohol/MAH molar ratio: 1.53).

Comparative Example 4

In Example 3, the monosaturated esterification modification treatment in the step (1) was not performed.

The results obtained in Examples 3 to 5 and Comparative Example 3 are shown in the following Table 3. However, in Comparative Example 3, the vulcanization sheet and the block for compression set could not be molded due to the large ML min and short t5 of the kneaded material, and the physical properties of the molded product could not be measured. Further, in Comparative Example 4, compound burning occurred during kneading, and the characteristics could not be measured.

Table 3-1

| Measurement item | | Ex 3 | Ex. 4 | Ex. 5 | Comp. Ex. 3 |
|---|---|---|---|---|---|
| (Mono-esterification modification treated copolymer) | | | | | |
| Composition ratio | (mol%) | | | | |
| Ethylene | | 67.7 | 67.7 | 67.7 | 67.7 |
| Methyl acrylate | | 31.1 | 31.1 | 31.1 | 31.1 |
| Mono-hexyl ester | | 1.06 | 0.95 | 1.09 | 0.72 |
| Maleic anhydride | | 0.14 | 0.25 | 0.11 | 0.48 |
| Compound temperature at the end of treatment | (°C) | 130 | 130 | 130 | 130 |
| MFR | (dg/min) | 51 | 52 | 51 | 54 |
| Tg | (°C) | -27.1 | -26.8 | -27.2 | -26.2 |
| Mono-hexyl esterification rate | (%) | 88 | 79 | 91 | 60 |

Table 3-2

| Measurement item | | Ex. 3 | Ex4 | Ex. 5 | Comp. Ex. 3 |
|---|---|---|---|---|---|
| ML min (125°C) | (pts) | 13 | 15 | 8 | 180 |
| t5 | (min) | 4.8 | 4.0 | 5.1 | 1.0 |
| Hardness (Duro A) | (pts) | 73 | 71 | 76 | |
| 100% modulus | (MPa) | 5.5 | 5.2 | 5.9 | |
| Tensile strengs | (MPa) | 15.9 | 15.4 | 15.4 | |
| Elongation at break | (%) | 255 | 260 | 250 | |
| Compression set (175°C, 70hr) | (%) | 26 | 26 | 38 | |
| Heat resistance (175°C, 70hr) | | | | | |
| Hardness change | (pts) | +2 | +3 | +3 | |

Example 6

In Example 3, the same amount (100 parts by weight) of the terpolymer (alcohol/MAH molar ratio: 9.45) obtained

in Polymerization Example 3 was used as the terpolymer, a 1 L kneader (DS1-5MHB-E, produced by Moriyama) was used as the closed kneader for use in the monosaturated esterification modification treatment in the step (1), and potassium laurate was not used. Further, in the step (2), each of the components other than hexamethylenediamine carbamate (CHEMINOX AC-6) and DBU-dodecane dihydrochloride was kneaded using the 1 L kneader (DS1-5MHB-E, produced by Moriyama). Subsequently, using an 8 inch open roll (produced by Otake Kikai Kogyo K.K.), 1.2 parts by weight of hexamethylenediamine carbamate and 2 parts by weight of DBU-dodecane dihydrochloride (70% product) were compounded, followed by kneading, thereby producing a composition for evaluating rubber physical properties. The obtained kneaded composition was subjected to primary vulcanization at 180°C for 10 minutes and oven vulcanization (secondary vulcanization) at 175°C for 4 hours, thereby molding a vulcanization sheet and a block for measuring compression set according to JIS.

Example 7

In Example 6, in the monosaturated esterification modification treatment in the step (1), 3 parts by weight of potassium laurate 50% master batch (metal soap product) was further used.

Example 8

In Example 6, in the monosaturated esterification modification treatment in the step (1), 2 parts by weight of dimethylstearylamine (Farmin DM8098, produced by Kao Corporation) was further used.

Example 9

In Example 6, in the monosaturated esterification modification treatment in the step (1), 1 parts by weight of 1,8-diazabicyclo[5.4.0]-7-undecene(DBU produced by San-Apro Ltd.) was further used.

Example 10

In Example 6, in the monosaturated esterification modification treatment in the step (1), 3.3 parts by weight of dimethylstearylamine (Farmin D86, produced by Kao Corporation) was further used.

Comparative Example 5

In Example 6, the monosaturated esterification modification treatment in the step (1) was not performed.
The results obtained in Examples 6 to 10 are shown in the following Table 4. However, in Comparative Example 5, compound burning occurred during kneading, and the characteristics could not be measured.

Table 4-1

| | | | | | | |
|---|---|---|---|---|---|---|
| Measurement item | | Ex.6 | Ex. 7 | Ex. 8 | Ex.9 | Ex. 10 |
| (Mono-esterification modification | | | | | | |
| treated copolymer) | | | | | | |
| Composition ratio | (mol%) | | | | | |
| Ethylene | | 65.5 | 65.5 | 65.5 | 65.5 | 65.5 |
| Methyl acrylate | | 33.7 | 33.7 | 33.7 | 33.7 | 33.7 |
| Mono-hexyl ester | | 0.64 | 0.82 | 0.84 | 0.81 | 0.82 |
| Maleic anhydride | | 0.26 | 0.08 | 0.06 | 0.09 | 0.08 |
| Compound temperature | | | | | | |
| at the end of treatment | (°C) | 104 | 101 | 100 | 101 | 102 |
| MFR | (dg/min) | 44 | 42 | 41 | 43 | 42 |
| Tg | (°C) | -23.9 | -24.1 | -24.2 | -24.0 | -24.4 |

(continued)

| Measurement item | | Ex.6 | Ex. 7 | Ex. 8 | Ex.9 | Ex. 10 |
|---|---|---|---|---|---|---|
| Mono-hexyl esterification rate | (%) | 71 | 91 | 93 | 90 | 91 |

Table 4-2

| | | | | | | |
|---|---|---|---|---|---|---|
| Measurement item | | Ex.6 | Ex.7 | Ex 8 | Ex.9 | Ex. 10 |
| ML min (125°C ) | (pts) | 71 | 11 | 9 | 11 | 9 |
| t5 | (min) | 2.4 | 8.7 | 7.6 | 7.4 | 7.1 |
| Hardness (Duro A) | (pts) | 70 | 76 | 73 | 70 | 72 |
| 100% modulus | (MPa) | 5.1 | 5.3 | 4.7 | 4.8 | 4.6 |
| Tensile strengs | (MPa) | 15.7 | 13.8 | 13.7 | 15.6 | 13.5 |
| Elongation at break | (%) | 335 | 305 | 320 | 355 | 345 |
| Compression set (175°C, 70hr) | (%) | 29 | 30 | 30 | 25 | 25 |
| Heat resistance (175°C, 70hr) | | | | | | |
| Hardness change | (pts) | +3 | +5 | +6 | +4 | +5 |

Example 11

In Example 1, a 1 L kneader (DS1-5MHB-E, produced by Moriyama) was used as the closed kneader for use in the monosaturated esterification modification treatment, and the same amount (100 parts by weight) of a product obtained by drying the monosaturated esterification modification treated copolymer obtained in Polymerization Example 4 (alcohol/MAH molar ratio: 5.67) and then storing at 23°C and 50% RH (relative humidity) for 4 weeks was used as the terpolymer. Moreover, the monoesterification rate was measured not only at the completion of drying, but also at 1-week and 4-week storage under the conditions of 23°C and 50% RH (relative humidity) in order to confirm changes in the esterification rate due to aging.

Example 12

In Example 11, 9 parts by weight of 1-hexanol (alcohol/MAH molar ratio: 6.17) and 2.5 parts by weight of potassium laurate were used in the monosaturated esterification modification treatment in the step (1).

Example 13

In Example 11, 7 parts by weight of 2-[2-(2-methoxyethoxy)ethoxy]ethanol (Mw:164.2) (alcohol/MAH molar ratio: 2.99) and 2 parts by weight of DBU-octylate (U-CAT SA102, produced by Safic-Alcan) were used in the monosaturated esterification modification treatment in the step (1).

The results obtained in Examples 11 to 13 are shown in the following Table 5.

Table 5-1

| | | | | |
|---|---|---|---|---|
| Measurement item | | Ex. 11 | Ex. 12 | Ex. 13 |
| (Mono-esterification modification | | | | |
| treated copolymer) | | | | |
| Composition ratio | (mol%) | | | |
| Ethylene | | 67.1 | 67.1 | 67.1 |

(continued)

| Measurement item | | | Ex. 11 | Ex. 12 | Ex. 13 |
|---|---|---|---|---|---|
| | Methyl acrylate | | 32.2 | 32.2 | 32.2 |
| | Mono ester + Maleic anhydride | | 0.7 | 0.7 | 0.7 |
| Compound temperature | | | | | |
| at | the end of treatment | (° C) | 110 | 110 | 110 |
| MFR | | (dg/min) | 9.1 | 9.1 | 9.1 |
| Tg | | (°C) | -29.1 | -29.1 | -29.1 |
| Mono esterification rate | | | | | |
| | After drying | (%) | 82 | 90 | 75 |
| | When stored 1-week after drying | (%) | 91 | 95 | 84 |
| | When stored 4-week after drying | (%) | 98 | 99 | 93 |

Table 5-2

| Measurement item | | Ex. 11 | Ex. 12 | Ex 13 |
|---|---|---|---|---|
| ML min (125°C ) | (pts) | 17 | 15 | 25 |
| t5 | (min) | 6.8 | 7.6 | 3.6 |
| Hardness (Duro A) | (pts) | 65 | 66 | 64 |
| 100% modulus | (MPa) | 2.7 | 3.1 | 3.9 |
| Tensile strengs | (MPa) | 17.9 | 17.2 | 17.9 |
| Elongation at break | (%) | 390 | 380 | 340 |
| Compression set (175°C, 70hr) | (%) | 33 | 42 | 20 |
| Heat resistance (175°C, 70hr) | | | | |
| Hardness change | (pts) | +2 | +3 | +2 |

Example 14

In Example 11, in the monosaturated esterification modification treatment of the step (1), 18 parts by weight of 1-hexanol (alcohol/MAH molar ratio: 12.34) was used. Further, in the step (2), hexamethylenediamine carbamate and DBU-dodecane dihydrochloride were not used.

Example 15

In Example 14, in the monosaturated esterification modification treatment in the step (1), 1 part by weight of 1,8-diazabicyclo[5.4.0]-7-undecene (DBU) was further used.

The results obtained in Examples 14 and 15 are shown in the following Table 6.

Table 6-1

| Measurement item | | Ex. 14 | Ex.15 |
|---|---|---|---|
| (Mono-esterification modification | | | |
| treated copolymer) | | | |

(continued)

| Measurement item | | Ex. 14 | Ex.15 |
|---|---|---|---|
| Composition ratio | (mol%) | | |
| Ethylene | | 67.1 | 67.1 |
| Methyl acrylate | | 32.2 | 32.2 |
| Mono ester + Maleic anhydride | | 0.7 | 0.7 |
| Compound temperature | | | |
| at the end of treatment | (°C) | 110 | 110 |
| MFR | (dg/min) | 9.1 | 9.1 |
| Tg | (°C) | -29.1 | -29.1 |
| Mono esterification rate | (%) | | |
| After drying | | 82 | 86 |
| When stored 1-week after drying | | 88 | 95 |
| When stored 4-week after drying | | 94 | 99 |

Table 6-2

| | | | |
|---|---|---|---|
| Measurement item | | Ex. 14 | Ex. 15 |
| ML min (125°C ) | (pts) | 18 | 16 |
| t5 | (min) | 5.7 | 5.6 |
| Hardness (Duro A) | (pts) | 64 | 65 |
| 100% modulus | (MPa) | 3.1 | 3.1 |
| Tensile strengs | (MPa) | 17.7 | 17.2 |
| Elongation at break | (%) | 380 | 390 |
| Compression set (175°C, 70hr) | (%) | 26 | 30 |
| Heat resistance (175°C, 70hr) | | | |
| Hardness change | (pts) | +4 | +4 |

## Claims

1. An ethylene-(meth)acrylate-based elastomer having a structure in which 40 to 79.9 mol% of ethylene, 20.0 to 50.0 mol% of an alkyl (meth)acrylate containing an alkyl group having 1 to 8 carbon atoms and/or an alkoxy (meth)acrylate containing an alkoxyalkyl group having 2 to 8 carbon atoms, 0.05 to 20.0 mol% of an unsaturated dicarboxylic acid monosaturated ester, and 0 to 20.0 mol% of an unsaturated dicarboxylic anhydride are copolymerized, and having a monosaturated esterification rate of the acid anhydride of 70% or more as measured by infrared absorption spectroscopy.

2. The ethylene-(meth)acrylate-based elastomer according to claim 1, wherein the alkyl (meth)acrylate is methyl acrylate.

3. The ethylene-(meth)acrylate-based elastomer according to claim 1, wherein the unsaturated dicarboxylic acid monosaturated ester is maleic monosaturated ester, and the unsaturated dicarboxylic anhydride is maleic anhydride.

4. A method for producing an ethylene-(meth)acrylate-based elastomer wherein copolymer of ethylene, an alkyl

(meth)acrylate containing an alkyl group having 1 to 8 carbon atoms and/or an alkoxy (meth)acrylate containing an alkoxyalkyl group having 2 to 8 carbon atoms and an unsaturated dicarboxylic anhydride is subjected to a monosaturated esterification modification treatment of the unsaturated dicarboxylic anhydride.

**5.** The method for producing an ethylene-(meth)acrylate-based elastomer according to claim 4, wherein the monosaturated esterification modification treatment is performed by reacting the copolymer with a saturated alcohol by means of a shear melt-kneading method.

**6.** The method for producing an ethylene-(meth)acrylate-based elastomer according to claim 5, wherein the saturated alcohol is used as the ratio of (number of moles of alcohol)/(number of moles of copolymerized maleic anhydride) is 1.6 or more.

**7.** The method for producing an ethylene-(meth)acrylate-based elastomer according to claim 5, wherein the shear melt-kneading method is performed using a roll kneader, a closed kneader, or a twin screw extruder.

**8.** The method for producing an ethylene-(meth)acrylate-based elastomer according to claim 4, wherein the monosaturated esterification modification treatment is performed using a catalyst.

**9.** The method for producing an ethylene-(meth)acrylate-based elastomer according to claim 8, wherein the catalyst is an alkali metal salt of higher fatty acid.

**10.** The method for producing an ethylene-(meth)acrylate-based elastomer according to claim 4, wherein an aging treatment is performed after the monosaturated esterification modification treatment.

**11.** An ethylene-(meth)acrylate-based elastomer composition comprising the ethylene-(meth)acrylate-based elastomer according to claim 1 compounded with a vulcanizing agent.

**12.** A vulcanization molded article obtained by vulcanization molding of the ethylene-(meth)acrylate-based elastomer composition according to claim 11.

## INTERNATIONAL SEARCH REPORT

International application No.
**PCT/JP2022/012517**

**A. CLASSIFICATION OF SUBJECT MATTER**

***C08F 8/14***(2006.01)i; ***C08F 210/02***(2006.01)i; ***C08L 23/08***(2006.01)i
FI: C08F210/02; C08F8/14; C08L23/08

According to International Patent Classification (IPC) or to both national classification and IPC

**B. FIELDS SEARCHED**

Minimum documentation searched (classification system followed by classification symbols)

C08F8/14; C08F210/02; C08L23/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 7-24086 A (DU PONT MITSUI POLYCHEM. COMPANY, LIMITED) 27 January 1995 (1995-01-27)<br>claims, examples | 1-3<br>11-12 |
| X<br>A | JP 7-132152 A (SUMITOMO RUBBER IND., LIMITED) 23 May 1995 (1995-05-23)<br>claims, examples | 1-3<br>11-12 |
| X<br>A | WO 2020/028245 A1 (E. I. DU PONT DE NEMOURS AND COMPANY) 06 February 2020 (2020-02-06)<br>claims, paragraph [0020], examples | 1-3<br>11-12 |
| X<br>A | WO 2020/028159 A2 (E. I. DU PONT DE NEMOURS AND COMPANY) 06 February 2020 (2020-02-06)<br>claims, examples | 1-3<br>11-12 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 June 2022** | **21 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

INTERNATIONAL SEARCH REPORT

International application No.
PCT/JP2022/012517

**Box No. III Observations where unity of invention is lacking (Continuation of item 3 of first sheet)**

This International Searching Authority found multiple inventions in this international application, as follows:

Invention 1: Claims 1-3 and 11-12

Documents 1-4 respectively disclose an ethylene-(meth)acrylate ester-maleic acid half ester copolymer (corresponding to the unsaturated dicarboxylic acid saturated monoester having a saturated monoesterification rate of 100%) or the like which fulfils the numerical ranges in the present invention of the content ratios of the structural components. None of the documents specifically indicates that the copolymers are elastomers. However, in light of the chemical compositions thereof, the copolymers are apparently elastomers. The inventions disclosed in documents 1-4 also fulfil the features in claims 2-3.

As such, claims 1-3 lack novelty in light of document 1 and thus do not have a special technical feature.

The inventions in claims 11-12 include all invention-specifying matters of claim 1.

Consequently, claims 1-3 and 11-12 are classified as invention 1.

Invention 2: Claims 4-10

Claims 4-10 and claim 1 classified as invention 1 share the technical feature of an "ethylene-(meth)acrylate elastomer having a structure resulting from copolymerization of ethylene, an alkyl (meth)acrylate having a C1-8 alkyl group and/or an alkoxy (meth)acrylate having a C2-8 alkoxyalkyl group and an unsaturated dicarboxylic acid saturated monoester". However, this technical feature does not make a contribution over the prior art in light of the contents disclosed in documents 1-4, and thus cannot be considered to be a special technical feature. There are no other same or corresponding special technical features among said inventions.

Further, claims 4-10 are not dependent on claim 1. Furthermore, claims 4-10 are not substantially identical to or similarly closely related to any of the claims classified as invention 1.

Consequently, claims 4-10 cannot be classified as invention 1.

Claims 4-10 have the special technical feature of a "method for producing an ethylene-(meth)acrylate elastomer, characterized in that a copolymer of ethylene, an alkyl (meth)acrylate having a C1-8 alkyl group and/or an alkoxy (meth)acrylate having a C2-8 alkoxyalkyl group and an unsaturated dicarboxylic anhydride is subjected to modification of saturated monoesterification of the unsaturated dicarboxylic anhydride", and thus are classified as invention 2.

Cited documents

Document 1: JP 7-24086 A, claims, examples (particularly, ethylene terpolymers A and B)
Document 2: JP 7-132152 A, claims, paragraph [0020], examples (particularly, paragraph [0020], trial resin (1) in the examples)
Document 3: WO 2020/028245 A1, claims, examples (particularly, claim 11, terpolymers of examples 1-7)
Document 4: WO 2020/028159 A2, claims, examples (particularly, ethylene acid copolymers of examples 1.1 and 1.2)

**INTERNATIONAL SEARCH REPORT**

International application No.
**PCT/JP2022/012517**

**Box No. III Observations where unity of invention is lacking (Continuation of item 3 of first sheet)**

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **Claims 1-3 and 11-12**

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
**Information on patent family members**

International application No.
**PCT/JP2022/012517**

| Patent document cited in search report | Publication date (day/month/year) | Patent family member(s) | Publication date (day/month/year) |
|---|---|---|---|
| JP 7-24086 A | 27 January 1995 | (Family: none) | |
| JP 7-132152 A | 23 May 1995 | US 5565524 A<br>claims, examples<br>EP 652254 A1 | |
| WO 2020/028245 A1 | 06 February 2020 | EP 3830188 A2<br>CN 112424279 A | |
| WO 2020/028159 A2 | 06 February 2020 | EP 3830187 A1<br>CN 112437791 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 50049389 A
- JP 8025586 A
- JP 7094486 B
- JP 61272204 A
- JP 2010235955 A